# EUROPEAN PATENT APPLICATION

(11) **EP 4 446 933 A1**
(43) Date of publication of application: **16.10.2024**
(21) Application number: 24151871.1
(22) Date of filing: 15.01.2024
(51) Int. Cl.: G06K 7/00, A47F 9/04, G07G 1/00, G06Q 10/08, H04W 4/80

(54) **CONTAINER CASE**

(30) Priority: 14.04.2023 JP 2023066449
(71) Applicant: Toshiba TEC Kabushiki Kaisha, Tokyo 141-8562 (JP)
(72) Inventor: SAKURAI, Wataru, Tokyo, 141-8562 (JP)
(74) Representative: Hoffmann Eitle

(57) **Abstract**

A container case that can restrain a drop in the accuracy of reading a wireless tag. According to one embodiment, a container case that contains an antenna radiating a radio wave for reading a wireless tag includes a plate-like component including a cavity, on a side where a reading area for the wireless tag is formed by the antenna.

## Description

### CROSS-REFERENCE TO RELATED APPLICATION

This application is based upon and claims the benefit of priority from Japanese Patent Application No. 2023-066449, filed on April 14, 2023, the entire contents of which are incorporated herein by reference.

### FIELD

Embodiments described herein relate generally to a container case.

### BACKGROUND

According to the related art, a reading device that reads information stored in a wireless tag such as an RF (radio frequency) tag is known. The reading device also reads a wireless tag attached to an object placed on a placing stand. The placing stand is formed of a material with a relatively high dielectric constant such as wood or a resin-based material like an acrylic material.

The antennas of the reading device and the wireless tag are designed to have a dimension of 1/2 wavelength. The reading device and the wireless tag are designed to have the same resonance frequency.

However, if the wireless tag is arranged near an object with a high dielectric constant, wavelength shortening occurs in the wireless tag and the electric length of the signal becomes longer. That is, the resonance frequency of the wireless tag shifts to a lower frequency. Consequently, if the wireless tag is arranged at a position near the placing stand, the accuracy of reading the wireless tag by the reading device drops.

### SUMMARY OF THE INVENTION

One of the objects of the present invention is to improve prior art techniques and overcome at least some of the prior art problems as for instance above illustrated.

According to a first aspect of the present invention, it is provided a container case, comprising an antenna that radiates a radio wave for reading a wireless tag; and
a plate-like component including a cavity, on a side where a reading area for the wireless tag is formed by the antenna.

Optionally, in the container case according to the first aspect of the invention, an object with the wireless tag attached is placed on the plate-like component, and the cavity is formed by a support part that supports the object.

Optionally, in the container case according to the first aspect of the invention, the plate-like component comprises a plurality of the support parts formed in a cylindrical shape.

Optionally, in the container case according to the first aspect of the invention, the plate-like component comprises a plurality of the support parts formed in a plate-like shape.

Optionally, in the container case according to the first aspect of the invention, the plate-like component comprises a plurality of the support parts comprising air bubbles.

Optionally, in the container case according to the first aspect of the invention, an entirety or a part of a surface of the plate-like component is covered with a sheet.

Optionally, in the container case according to the first aspect of the invention, the plate-like component comprises a plurality of support parts that support the object and form a plurality of cavities, the plurality of cavities are not in contact with the wireless tag.

According to a second aspect of the invention, it is provided a container case, comprising a first antenna that radiates a radio wave for reading a wireless tag; a first plate-like component including a first cavity, on a side where a reading area for the wireless tag is formed by the first antenna; a second antenna that radiates a radio wave for reading the wireless tag; and a second plate-like component including a second cavity, on a side where a reading area for the wireless tag is formed by the second antenna, the second plate-like component perpendicular to the first plate-like component.

Optionally, in the container case according to the second aspect of the invention, an object with the wireless tag attached is placed on the first plate-like component, and the first cavity is formed by a support part that supports the object.

Optionally, in the container case according to the second aspect of the invention, the first plate-like component and the second plate-like component each comprise a plurality of the support parts formed in a cylindrical shape.

Optionally, in the container case according to the second aspect of the invention, the first plate-like component and the second plate-like component each comprise a plurality of the support parts formed in a plate-like shape.

Optionally, in the container case according to the second aspect of the invention, the first plate-like component and the second plate-like component each comprise a plurality of the support parts comprising air bubbles.

Optionally, in the container case according to the second aspect of the invention, an entirety or a part of a surface of the first plate-like component and the second plate-like component are each covered with a sheet.

Optionally, in the container case according to the second aspect of the invention, the first plate-like component comprises a plurality of support parts that support the object and form a plurality of first cavities, the plurality of first cavities are not in contact with the wireless tag.

According to a third aspect of the invention, it is provided a container case, comprising a first antenna that radiates a radio wave for reading a wireless tag; a first plate-like component including a first cavity, on a side where a reading area for the wireless tag is formed by the first antenna; a second antenna that radiates a radio wave for reading the wireless tag; a second plate-like component including a second cavity, on a side where a reading area for the wireless tag is formed by the second antenna, the second plate-like component perpendicular to the first plate-like component; a third antenna that radiates a radio wave for reading the wireless tag; a third plate-like component including a third cavity, on a side where a reading area for the wireless tag is formed by the third antenna, the third plate-like component perpendicular to the second plate-like component.

Optionally, in the container case according to the third aspect of the invention, an object with the wireless tag attached is placed on the first plate-like component, and the first cavity is formed by a support part that supports the object.

Optionally, in the container case according to the third aspect of the invention, the first plate-like component and the second plate-like component and the third plate-like component each comprise a plurality of the support parts formed in a cylindrical shape.

Optionally, in the container case according to the third aspect of the invention, the first plate-like component and the second plate-like component and the third plate-like component each comprise a plurality of the support parts formed in a plate-like shape.

Optionally, in the container case according to the third aspect of the invention, the first plate-like component and the second plate-like component and the third plate-like component each comprise a plurality of the support parts comprising air bubbles.

Optionally, in the container case according to the third aspect of the invention, an entirety or a part of a surface of the first plate-like component and the second plate-like component and the third plate-like component are each covered with a sheet.

### DESCRIPTION OF THE DRAWINGS

FIG. 1 shows an example of a reading system according to a first embodiment.
FIG. 2 is a front view showing an example of the external appearance of a reading unit with a shopping basket placed thereon.
FIG. 3 is a perspective view showing an example of the external appearance of the reading unit.
FIG. 4 is a perspective view showing an example of the external appearance of the reading unit in a state where a first support plate and a second support plate are removed.
FIG. 5 is a cross-sectional view showing an example of the reading unit.
FIG. 6 is a perspective view showing an example of the external appearance of a support plate.
FIG. 7 is a cross-sectional view showing an example of a cross section of the support plate.
FIG. 8 shows an example of the support plate with a wireless tag placed thereon.
FIG. 9 is a cross-sectional view showing an example of a support plate according to a second embodiment.
FIG. 10 is a perspective view showing an example of a support plate according to a third embodiment.
FIG. 11 is a cross-sectional view showing an example of a cross section of the support plate.
FIG. 12 shows an example of the support plate with a wireless tag placed thereon.
FIG. 13 is a cross-sectional view showing an example of a support plate according to a fourth embodiment.
FIG. 14 is a perspective view showing an example of a support plate according to a fifth embodiment.
FIG. 15 is a cross-sectional view showing an example of a support plate according to a sixth embodiment.
FIG. 16 is a cross-sectional view showing an example of a reading unit according to a seventh embodiment.
FIG. 17 is a cross-sectional view showing an example of a reading unit according to an eighth embodiment.
FIG. 18 is a cross-sectional view showing an example of a reading unit according to a ninth embodiment.

### DETAILED DESCRIPTION

An embodiment described herein is to provide a container case that can restrain a drop in the accuracy of reading a wireless tag.

In general, according to one embodiment, a container case that contains an antenna radiating a radio wave for reading a wireless tag includes a plate-like component including a cavity, on a side where a reading area for the wireless tag is formed by the antenna.

An embodiment of the container case will now be described in detail with reference to the accompanying drawings. The embodiment described below is one embodiment of the container case and should not limit the configuration and specifications or the like of the container case.

### First Embodiment

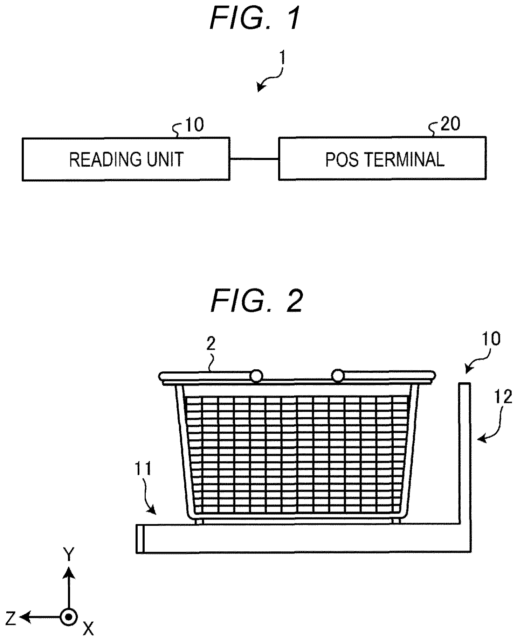

FIG. 1 shows an example of a reading system 1 according to a first embodiment. The reading system 1 includes a reading unit 10 and a POS (point of sales) terminal 20. The POS terminal 20 and the reading unit 10 are communicably connected to each other.

The POS terminal 20 causes the reading unit 10 to read a wireless tag such as an RF tag. For example, the POS terminal 20 causes the reading unit 10 to read a wireless tag and thus acquires merchandise information of a merchandise item with the wireless tag attached. The POS terminal 20 then executes merchandise registration to register a sales target merchandise item, based on the acquired merchandise information. The POS terminal 20 may executes not only reading of the wireless tag but also writing to the wireless tag.

The reading unit 10 is a reading device that reads a wireless tag placed thereon, under the control of the POS terminal 20.

FIG. 2 is a front view showing an example of the external appearance of the reading unit 10 with a shopping basket 2 placed thereon. The reading unit 10 reads a wireless tag attached to a merchandise item put in the shopping basket 2, under the control of the POS terminal 20. The reading unit 10 reads not only the wireless tag attached to the merchandise item put in the shopping basket 2 but also a wireless tag attached to a merchandise item placed on the reading unit 10.

To describe this more in detail, the reading unit 10 has a placing part 11 where the shopping basket 2 and a merchandise item are placed, and a first sidewall part 12 arranged on a side of the placing part 11. The placing part 11 is a box-shaped pedestal. The placing part 11 has a first antenna 141 and a second antenna 142 inside.

The first sidewall part 12 is a sidewall arranged to a side of the placing part 11. The first sidewall part 12 has substantially the same height as the shopping basket 2 placed on the placing part 11. The first sidewall part 12 has a third antenna 143 inside.

In this embodiment, the lateral direction of the placing part 11 is defined as an X-axis direction. The longitudinal direction of the placing part 11 is defined as a Z-axis direction. The direction perpendicular to the placing part 11 is defined as a Y-axis direction.

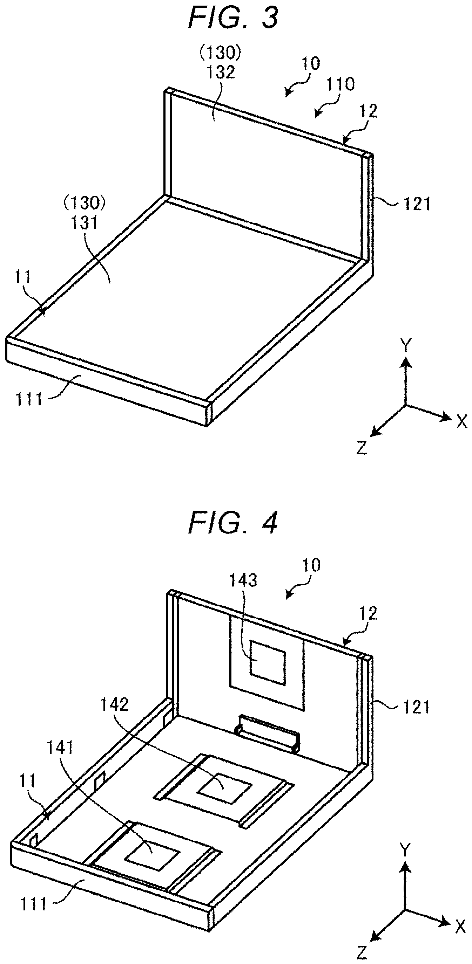

FIG. 3 is a perspective view showing an example of the external appearance of the reading unit 10. The reading unit 10 has a container case 110 that contains an antenna radiating a radio wave for reading a wireless tag. The container case 110 may contain not only the antenna but also other components such as an electronic circuit. The container case 110 has a first support plate 131 covering one surface of the placing part 11, a first box 111 covering the other surfaces of the placing part 11 than the surface covered with the first support plate 131, a second support plate 132 covering one surface of the first sidewall part 12, and a second box 121 covering the other surfaces of the first sidewall part 12 than the surface covered with the second support plate 132.

The first support plate 131 is arranged at the surface where the shopping basket 2 and a merchandise item are placed, of the placing part 11. In other words, the first support plate 131 is arranged at the surface on the side where a reading area for a wireless tag is formed.

The second support plate 132 is arranged at the surface where the shopping basket 2 and a merchandise item are placed, of the first sidewall part 12. In other words, the second support plate 132 is arranged at the surface on the side where a reading area for a wireless tag is formed.

The first support plate 131 and the second support plate 132 are plate-like components formed of the same material. Hereinafter, if the first support plate 131 and the second support plate 132 are not distinguished from each other, each of these support plates is referred to as a support plate 130.

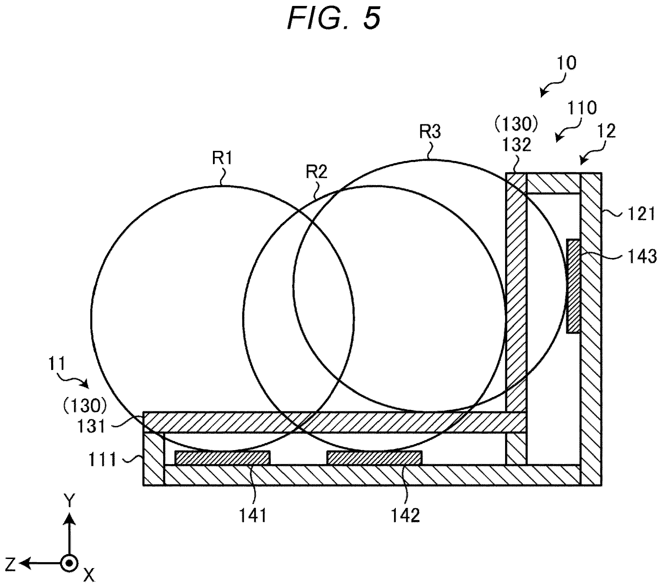

FIG. 4 is a perspective view showing an example of the external appearance of the reading unit 10 in a state where the first support plate 131 and the second support plate 132 are removed. FIG. 5 is a cross-sectional view showing an example of the reading unit 10. The placing part 11 has the first antenna 141 and the second antenna 142 inside of the first support plate 131. The first antenna 141 and the second antenna 142 are arrayed in the longitudinal direction of the placing part 11, that is, in the Z-axis direction. The placing part 11 has the plate-like first support plate 131 including a cavity, on the side where a first reading area R1 for a wireless tag is formed by the first antenna 141 and a second reading area R2 for a wireless tag is formed by the second antenna 142. The first sidewall part 12 has the third antenna 143 inside of the second support plate 132. The first sidewall part 12 has the plate-like second support plate 132 including a cavity, on the side where a third reading area R3 for a wireless tag is formed by the third antenna 143.

The first antenna 141 radiates a radio wave in the Y-axis direction and toward the first support plate 131 and thus forms the first reading area R1. The second antenna 142 radiates a radio wave in the Y-axis direction and toward the first support plate 131 and thus forms the second reading area R2. The third antenna 143 radiates a radio wave in the Z-axis direction and toward the second support plate 132 and thus forms the third reading area R3.

The support plate 130 will now be described in detail.

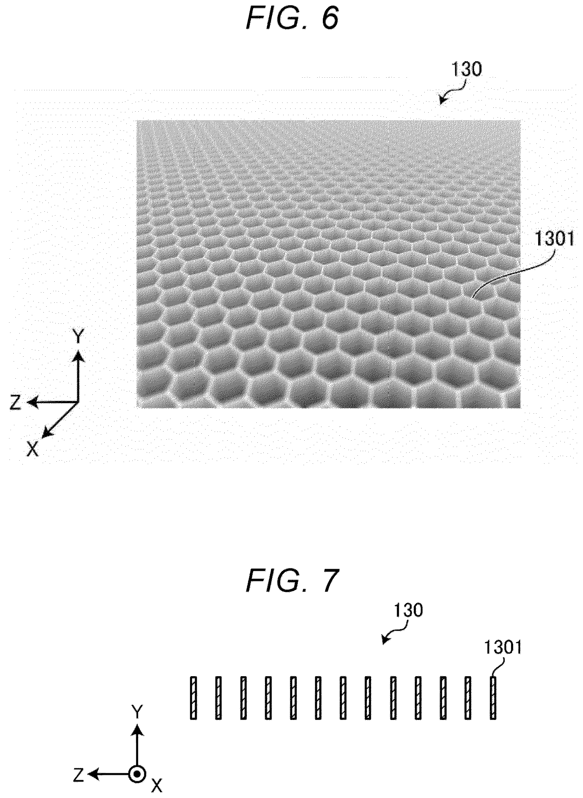

FIG. 6 is a perspective view showing an example of the external appearance of the support plate 130. The support plate 130 is formed of a material with a relatively low dielectric constant such as an acrylic resin or wood. The support plate 130 has a support part 1301 that supports an object such as a merchandise item with a wireless tag attached. An object such as a merchandise item with a wireless tag attached is placed on the support plate 130, and the support part 1301 supporting the object forms a cavity. In the support plate 130, the support part 1301 supports an object and thus forms a cavity that is not in contact with or is not close to a wireless tag.

It is known that the accuracy of reading a wireless tag does not drop if the wireless tag is arranged in the air. Therefore, a cavity is formed in the support plate 130 and thus restrains a drop in the accuracy of reading a wireless tag.

The support plate 130 has a plurality of cylindrically formed support parts 1301. For example, the support part 1301 is a pillar formed in a hexagonal cylindrical shape. The support plate 130 is a plate in which the plurality of support parts 1301, each being formed in a hexagonal cylindrical shape, are arranged without any gap. That is, the support plate 130 is a plate with a honeycomb structure. As the plurality of support parts 1301 are arranged next to each other, the support plate 130 is formed as a grid-like plate. The support part 1301 is not limited to the hexagonal shape and may be other polygonal shapes than the hexagonal shape and may also be circular. While the support parts 1301 are arranged without any gap in the support plate 130 shown in FIG. 6, a gap may be provided between the support parts 1301. When the shopping basket 2 or a merchandise item is placed thereon, the support parts 1301 support the shopping basket 2 or the merchandise item.

FIG. 7 is a cross-sectional view showing an example of a cross section of the support plate 130. The cross section shown in FIG. 7 is a cross section taken substantially at the center in the longitudinal direction of the support plate 130. The support plate 130 is formed of the hexagonal cylindrical support parts 1301 and therefore has a number of cavities.

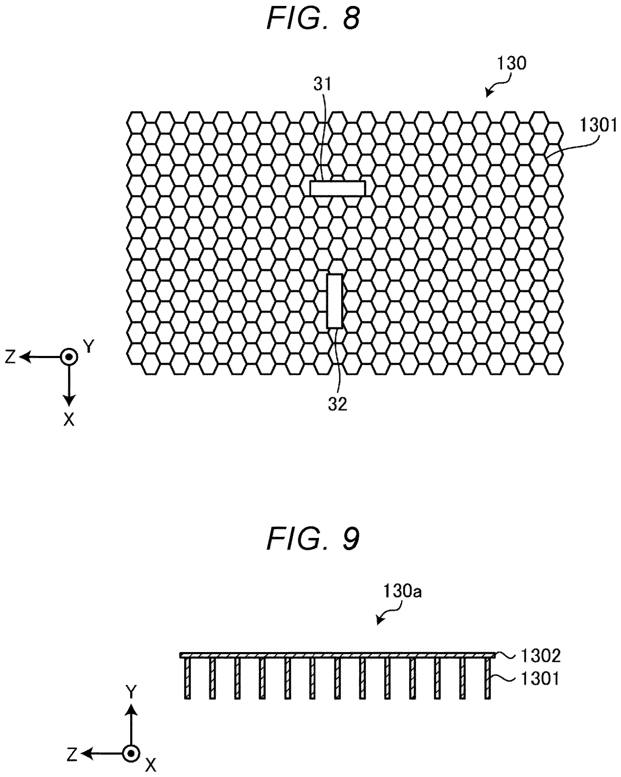

FIG. 8 shows an example of the support plate 130 with a wireless tag placed thereon. A first wireless tag 31 shown in FIG. 8 is arranged substantially parallel to the Z-axis direction. A second wireless tag 32 is arranged substantially parallel to the X-axis direction. When the first wireless tag 31 and the second wireless tag 32 are placed on the support plate 130, the part of the first wireless tag 31 and the second wireless tag 32 that is in contact with or is close to the support plate 130 is smaller than when the first wireless tag 31 and the second wireless tag 32 are placed on a plate covered with an acrylic resin on an entire surface. Therefore, in the wireless tags, wavelength shortening is less likely to occur and the resonance frequency is less likely to shift. That is, a drop in the accuracy of reading the wireless tags by the reading unit 10 can be restrained.

As described above, the reading unit 10 according to the first embodiment has the container case 110 containing the first antenna 141, the second antenna 142, and the third antenna 143 radiating a radio wave for reading a wireless tag. The container case 110 has the support plate 130 having the hexagonal cylindrical support part 1301, on the side where the first reading area R1, the second reading R2, and the third reading area R3 are formed. The support plate 130 supports a wireless tag and arranges the wireless tag in the air. Thus, the wireless tag is spaced apart from the material with a high dielectric constant and therefore a drop in the accuracy of reading is restrained. The container case 110 can thus restrain a drop in the accuracy of reading the wireless tag.

### Second Embodiment

FIG. 9 is a cross-sectional view showing an example of a support plate 130a according to a second embodiment. The support plate 130a shown in FIG. 9 has hexagonal cylindrical support parts 1301 arranged without any gap, and a sheet 1302. The hexagonal cylindrical support parts 1301 arranged without any gap are covered with the sheet 1302. That is, the entirety or a part of the surface of the support plate 130a is covered with the sheet 1302. For example, the sheet 1302 is bonded to the support plate 130a.

For example, the sheet 1302 has a thickness of approximately 1 millimeter. The sheet 1302 is formed of a material with a relatively low dielectric constant. For example, the sheet 1302 may be formed of an acrylic resin, a cloth, or other materials.

The support part 1301 is formed in a hexagonal cylindrical shape. The sheet 1302 is bonded to the support plate 130a and thus can close the cylindrical hole. Therefore, the sheet 1302 can prevent an object from entering the cylindrical hole. Also, the sheet 1302 can enhance the strength of the surface of the support plate 130a.

As described above, the entirety or a part of the surface of the support plate 130a according to the second embodiment is covered with the sheet 1302. Therefore, in the support plate 130a, an object can be prevented from entering the hole of the cylindrically formed support part 1301. Also, the sheet 1302 can enhance the strength of the surface of the support plate 130a.

### Third Embodiment

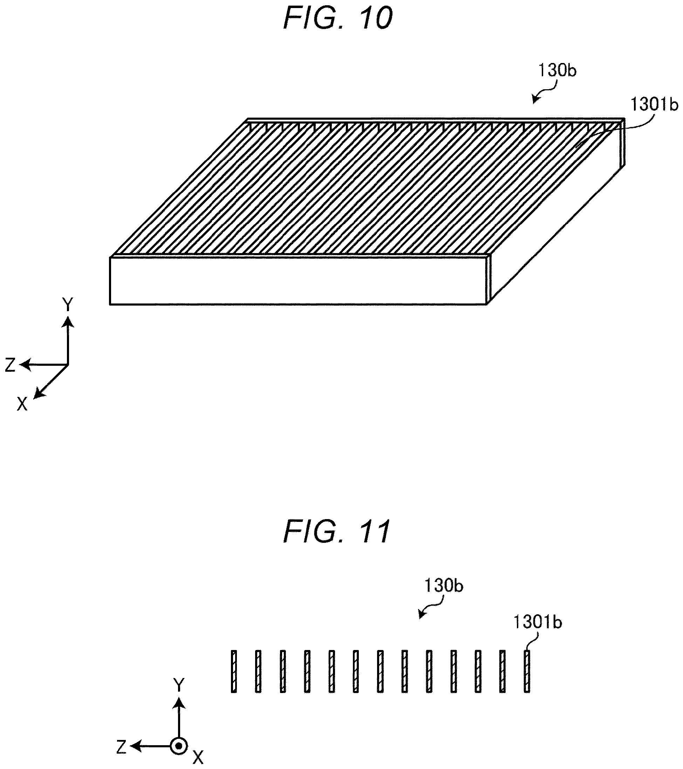

FIG. 10 is a perspective view showing an example of a support plate 130b according to a third embodiment. The support plate 130b has a plurality of support parts 1301b, each being formed in a plate-like shape. The plurality of support parts 1301b are arrayed to form the support plate 130b.

FIG. 11 is a cross-sectional view showing an example of a cross section of the support plate 130b. The cross section shown in FIG. 11 is a cross section taken substantially at the center in the longitudinal direction of the support plate 130b. The support plate 130b is formed of the plate-like support parts 1301b and therefore has a number of cavities.

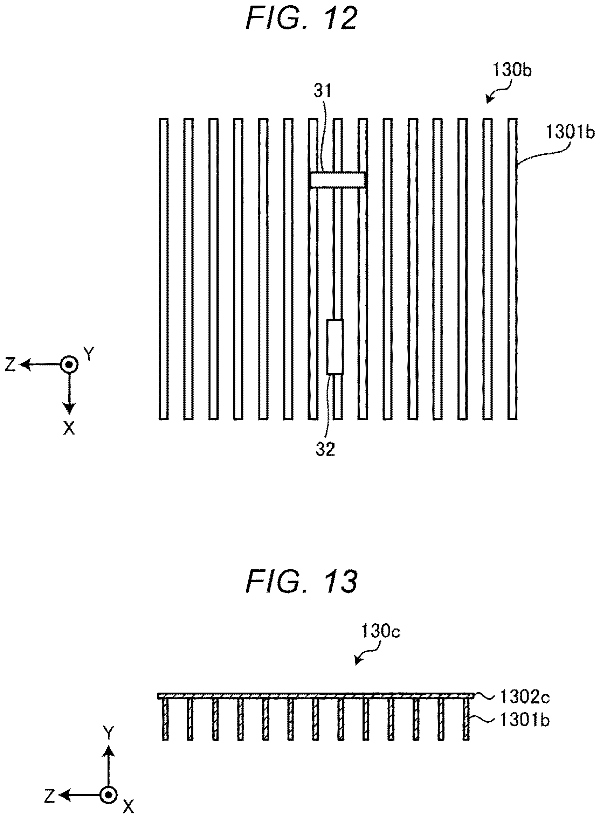

FIG. 12 shows an example of the support plate 130b with a wireless tag placed thereon. A first wireless tag 31 shown in FIG. 12 is arranged substantially parallel to the Z-axis direction. A second wireless tag 32 is arranged substantially parallel to the X-axis direction.

When the first wireless tag 31 is placed on the support plate 130b, the part of the first wireless tag 31 that is in contact with or is close to the support plate 130b is smaller than when the first wireless tag 31 is placed on a plate of an acrylic resin. Therefore, in the first wireless tag 31, wavelength shortening is less likely to occur and the resonance frequency is less likely to shift. That is, a drop in the accuracy of reading the first wireless tag 31 by the reading unit 10 can be restrained.

Meanwhile, the second wireless tag 32 is in contact with the support part 1301b substantially in its entirety. Therefore, in the second wireless tag 32, wavelength shortening may occur and the accuracy of reading may drop. However, this occurs if the wireless tag and the support part 1301b are arranged parallel to each other. That is, if the wireless tag and the support part 1301b are not parallel to each other, only a part of the wireless tag is in contact with the support part 1301b. In such a case, in the wireless tag, wavelength shortening is less likely to occur and the resonance frequency is less likely to shift. That is, a drop in the accuracy of reading the wireless tag by the reading unit 10 can be restrained.

Thus, the accuracy of reading by the reading unit 10 may drop if the wireless tag and the support part 1301b are arranged parallel to each other. However, otherwise, a drop in the accuracy of reading the wireless tag can be restrained.

As described above, the support plate 130b according to the third embodiment has the plurality of plate-like support parts 1301b. In this case, too, the support plate 130b supports a wireless tag and arranges the wireless tag in the air. Thus, the wireless tag is spaced apart from the material with a high dielectric constant and therefore a drop in the accuracy of reading is restrained. The container case 110 can thus restrain a drop in the accuracy of reading the wireless tag.

### Fourth Embodiment

FIG. 13 is a cross-sectional view showing an example of a support plate 130c according to a fourth embodiment. The support plate 130c shown in FIG. 13 has a plurality of plate-like support parts 1301b that are arrayed, and a sheet 1302c. The plurality of plate-like support parts 1301b that are arrayed are covered with the sheet 1302c. That is, the entirety or a part of the surface of the support plate 130c is covered with the sheet 1302c. For example, the sheet 1302c is bonded to the support plate 130c.

For example, the sheet 1302c has a thickness of approximately 1 millimeter. The sheet 1302c is formed of a material with a relatively low dielectric constant. For example, the sheet 1302c may be formed of an acrylic resin, a cloth, or other materials.

The support part 1301b is formed in a plate-like shape. The sheet 1302c is bonded to the support plate 130c and thus can close the gap between the plates. Therefore, an object can be prevented from entering the gap between the support parts 1301b. Also, the sheet 1302c can enhance the strength of the surface of the support plate 130c.

As described above, the entirety or a part of the surface of the support plate 130c according to the fourth embodiment is covered with the sheet 1302c. Therefore, in the support plate 130c, an object can be prevented from entering the gap between the plate-like support parts 1301b that are arrayed. Also, the sheet 1302c can enhance the strength of the surface of the support plate 130c.

### Fifth Embodiment

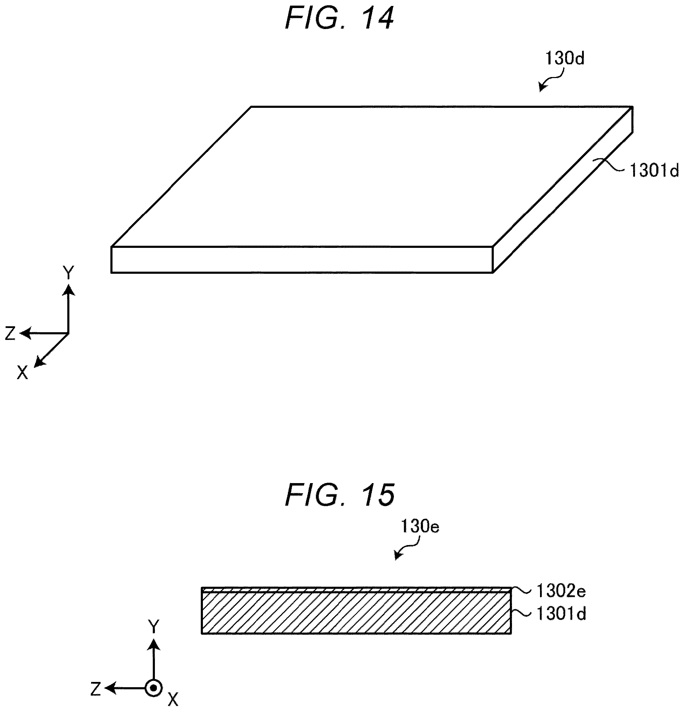

FIG. 14 is a perspective view showing an example of a support plate 130d according to a fifth embodiment. The support plate 130d has a support part 1301d in the form of air bubbles. That is, the support plate 130d has a plurality of cavities formed by air bubbles. For example, the support plate 130d has the support part 1301d of air bubbles formed by foaming, or the like. Specifically, the support plate 130d is formed of a polystyrene foam, a urethane foam or the like. Alternatively, the support plate 130d may have the support part 1301d of air bubbles formed by superimposing a vinyl, or the like. Specifically, the support plate 130d may be formed of an air cushion.

The support plate 130d has the plurality of cavities due to the support part 1301d of air bubbles or the like. Therefore, if a wireless tag is supported by the support plate 130d, wavelength shortening is less likely to occur and the resonance frequency is less likely to shift. That is, a drop in the accuracy of reading the wireless tag by the reading unit 10 can be restrained.

As described above, the support plate 130d according to the fifth embodiment has the plurality of cavities due to the support part 1301d of air bubbles or the like. Thus, the amount of the material with a high dielectric constant arranged near a wireless tag is small and therefore a drop in the accuracy of reading is restrained. The container case 110 can thus restrain a drop in the accuracy of reading the wireless tag.

### Sixth Embodiment

FIG. 15 is a cross-sectional view showing an example of a support plate 130e according to a sixth embodiment. The support plate 130e shown in FIG. 15 has a support part 1301d in the form of air bubbles and a sheet 1302d. The entirety or a part of the surface of the support plate 130e is covered with the sheet 1302d. For example, the sheet 1302d is bonded to the support plate 130e.

For example, the sheet 1302d has a thickness of approximately 1 millimeter. The sheet 1302d is formed of a material with a relatively low dielectric constant. For example, the sheet 1302d may be formed of an acrylic resin, a cloth, or other materials. The sheet 1302d can enhance the strength of the surface.

As described above, the entirety or a part of the surface of the support plate 130e according to the sixth embodiment is covered with the sheet 1302d. Therefore, in the support plate 130e, an object can be prevented from entering the hole in the support part 1301d formed of air bubbles. Also, the sheet 1302d can enhance the strength of the surface of the support plate 130e.

### Seventh Embodiment

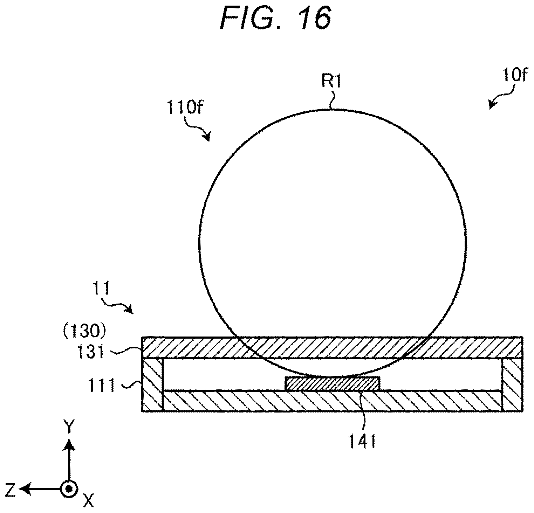

FIG. 16 is a cross-sectional view showing an example of a reading unit 10f according to a seventh embodiment. The reading unit 10f does not have the first sidewall part 12 of the reading unit 10 according to the first embodiment.

In other words, the reading unit 10f has a placing part 11 covered with a container case 110f. The placing part 11 has a first antenna 141 and does not have a second antenna 142. The placing part 11 has a first support plate 131. The first antenna 141 forms a first reading area R1.

The support plate of the reading unit 10f is not limited to the support plate 130 according to the first embodiment. The reading unit 10f may have the support plate 130a according to the second embodiment, the support plate 130b according to the third embodiment, the support plate 130c according to the fourth embodiment, the support plate 130d according to the fifth embodiment, or the support plate 130e according to the sixth embodiment.

As described above, the reading unit 10f according to the seventh embodiment does not the first sidewall part 12. In this case, too, if the wireless tag is supported by the support plate 130, wavelength shortening is less likely to occur and the resonance frequency is less likely to shift. That is, a drop in the accuracy of reading the wireless tag by the reading unit 10f can be restrained.

### Eighth Embodiment

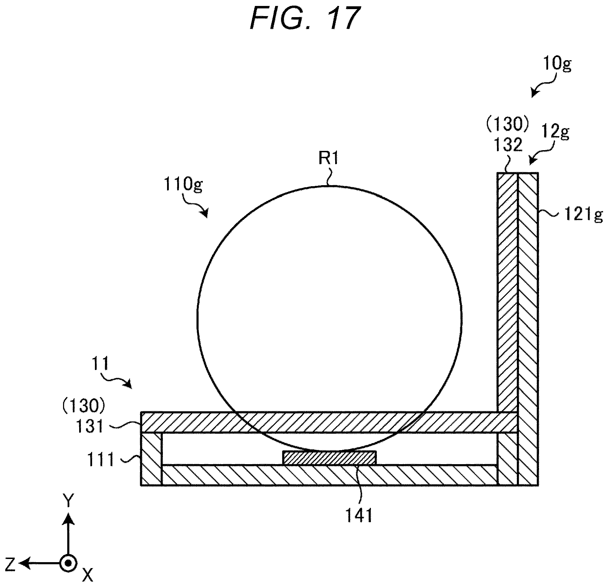

FIG. 17 is a cross-sectional view showing an example of a reading unit 10g according to an eighth embodiment. The reading unit 10g has a placing part 11 and a first sidewall part 12g.

The first sidewall part 12g does not have the third antenna 143 according to the first embodiment. However, the first sidewall part 12g has a second support plate 132. By having the second support plate 132, the first sidewall part 12g can be restrained from coming into contact with or coming close to a wireless tag. Therefore, in the wireless tag, wavelength shortening is less likely to occur and the resonance frequency is less likely to shift. That is, a drop in the accuracy of reading the wireless tag by the reading unit 10g can be restrained.

The support plate of the reading unit 10g is not limited to the support plate 130 according to the first embodiment. The reading unit 10g may have the support plate 130a according to the second embodiment, the support plate 130b according to the third embodiment, the support plate 130c according to the fourth embodiment, the support plate 130d according to the fifth embodiment, or the support plate 130e according to the sixth embodiment.

As described above, the reading unit 10g according to the eighth embodiment does not have an antenna in the first sidewall part 12g. In this case, too, if the wireless tag is supported by the support plate 130, wavelength shortening is less likely to occur and the resonance frequency is less likely to shift. That is, a drop in the accuracy of reading the wireless tag by the reading unit 10g can be restrained.

### Ninth Embodiment

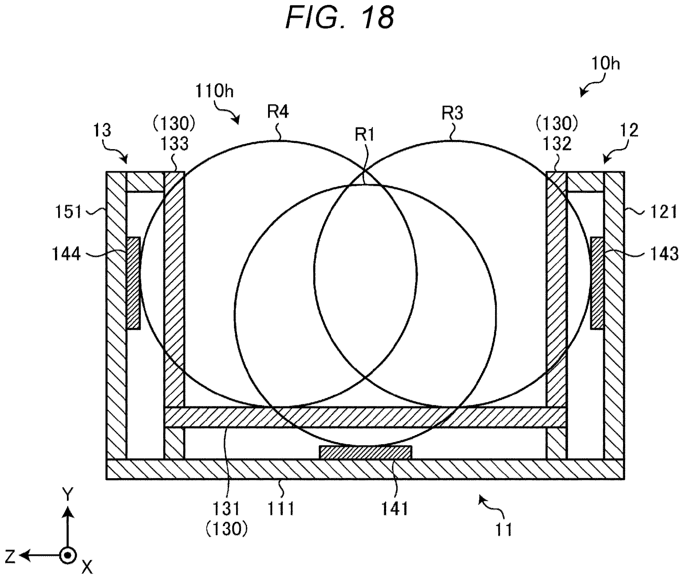

FIG. 18 is a cross-sectional view showing an example of a reading unit 10h according to a ninth embodiment. The reading unit 10h has a placing part 11, a first sidewall part 12, and a second sidewall part 13.

The second sidewall part 13 is provided on the other side of the placing part 11 from the first sidewall part 12. The second sidewall part 13 has a third support plate 133 covering one surface of the second sidewall part 13, and a third box 151 covering the other surfaces than the surface of the second sidewall part 13 covered with the third support plate 133. The second sidewall part 13 has a fourth antenna 144 inside the space formed by the third support plate 133 and the third box 151. The fourth antenna 144 radiates a radio wave in the Z-axis direction and toward the third support plate 133 and thus forms a fourth reading area R4.

To described this further in detail, the third support plate 133 is arranged facing the second support plate 132. The third support plate 133 is a plate-like member formed of the same material as the first support plate 131 and the second support plate 132. That is, the third support plate 133 may be the same as the support plate 130 according to the first embodiment, the support plate 130a according to the second embodiment, the support plate 130b according to the third embodiment, the support plate 130c according to the fourth embodiment, the support plate 130d according to the fifth embodiment, or the support plate 130e according to the sixth embodiment. Hereinafter, if the first support plate 131, the second support plate 132, and the third support plate 133 are not distinguished from each other, each of these support plates is referred to as the support plate 130.

If the shopping basket 2 or a merchandise item is placed on the placing part 11, the reading unit 10h reads a wireless tag from the three directions of the placing part 11, the first sidewall part 12, and the second sidewall part 13. Therefore, failure to read the wireless tag by the reading unit 10h can be restrained.

If the wireless tag is supported by the support plate 130, wavelength shortening is less likely to occur and the resonance frequency is less likely to shift. That is, a drop in the accuracy of reading the wireless tag by the reading unit 10h can be restrained. The placing part 11 may be surrounded not only by the first sidewall part 12 and the second sidewall part 13 but also by even more sidewall parts.

As described above, the reading unit 10h according to the ninth embodiment has the placing part 11, the first sidewall part 12, and the second sidewall part 13. In this case, too, if a wireless tag is supported by the support plate 130, wavelength shortening is less likely to occur and the resonance frequency is less likely to shift. That is, a drop in the accuracy of reading the wireless tag by the reading unit 10h can be restrained.

While some embodiments of the present disclosure have been described, these embodiments are presented simply as examples and are not intended to limit the scope of the present disclosure. These novel embodiments can be implemented in various other forms and can include various omissions, replacements, and changes without departing from the scope of the present disclosure as defined by the appended claims. These embodiments and modifications thereof are included in the scope of the present disclosure and also included in the scope of the claims and equivalents thereof.

## Claims

1. A container case, comprising:
an antenna that radiates a radio wave for reading a wireless tag; and
a plate-like component including a cavity, on a side where a reading area for the wireless tag is formed by the antenna.

2. The container case according to claim 1, wherein
an object with the wireless tag attached is placed on the plate-like component, and the cavity is formed by a support part that supports the object.

3. The container case according to claim 2, wherein
the plate-like component comprises a plurality of the support parts formed in a cylindrical shape or in a plate-like shape.

4. The container case according to claim 2 or 3, wherein
the plate-like component comprises a plurality of the support parts comprising air bubbles.

5. The container case according to any of claims 1 to 4, wherein
an entirety or a part of a surface of the plate-like component is covered with a sheet.

6. The container case according to any of claims 1 to 5, wherein the plate-like component comprises a plurality of support parts that support the object and form a plurality of cavities, the plurality of cavities are not in contact with the wireless tag.

7. A container case, comprising:
a first antenna that radiates a radio wave for reading a wireless tag;
a first plate-like component including a first cavity, on a side where a reading area for the wireless tag is formed by the first antenna;
a second antenna that radiates a radio wave for reading the wireless tag; and
a second plate-like component including a second cavity, on a side where a reading area for the wireless tag is formed by the second antenna, the second plate-like component perpendicular to the first plate-like component.

8. The container case according to claim 7, wherein
an object with the wireless tag attached is placed on the first plate-like component, and the first cavity is formed by a support part that supports the object.

9. The container case according to claim 8, wherein:
the first plate-like component and the second plate-like component each comprise a plurality of the support parts formed in a cylindrical shape or in a plate-like shape; and/or wherein:
the first plate-like component and the second plate-like component each comprise a plurality of the support parts comprising air bubbles.

10. The container case according to any of claims 7 to 9, wherein
an entirety or a part of a surface of the first plate-like component and the second plate-like component are each covered with a sheet.

11. The container case according to any of claims 7 to 10, wherein the first plate-like component comprises a plurality of support parts that support the object and form a plurality of first cavities, the plurality of first cavities are not in contact with the wireless tag.

12. A container case according to any of claims 7 to 11, further comprising:
a third antenna that radiates a radio wave for reading the wireless tag;
a third plate-like component including a third cavity, on a side where a reading area for the wireless tag is formed by the third antenna, the third plate-like component perpendicular to the second plate-like component.

13. The container case according to claim 12, wherein
the first plate-like component and the second plate-like component and the third plate-like component each comprise a plurality of the support parts formed in a cylindrical shape or in a plate-like shape.

14. The container case according to claim 13, wherein
the first plate-like component and the second plate-like component and the third plate-like component each comprise a plurality of the support parts comprising air bubbles.

15. The container case according to claim 13 or 14, wherein
an entirety or a part of a surface of the first plate-like component and the second plate-like component and the third plate-like component are each covered with a sheet.
